# EUROPEAN PATENT SPECIFICATION

(11) **EP 4 620 160 B1**
(45) Date of publication and mention of the grant of the patent: **11.03.2026**
(21) Application number: 24703563.7
(22) Date of filing: 06.02.2024
(51) Int. Cl.: H04L 12/10, H04L 12/12

(54) **A SYSTEM IN A TELECOMMUNICATIONS NETWORK AND A METHOD OF RETROFITTING THE SAME**
SYSTEM IN EINEM TELEKOMMUNIKATIONSNETZWERK UND VERFAHREN ZU DESSEN NACHRÜSTUNG
SYSTÈME DANS UN RÉSEAU DE TÉLÉCOMMUNICATIONS ET PROCÉDÉ DE MISE À NIVEAU DE CELUI-CI

(30) Priority: 14.03.2023 EP 23161752
(43) Date of publication of application: 24.09.2025
(73) Proprietor: British Telecommunications public limited company, London, Greater London E1 8EE (GB)
(72) Inventor: PARKER, Alexander, London, E1 8EE (GB); COLE, Darren, London, E1 8EE (GB)
(74) Representative: British Telecommunications public limited company Intellectual Property Department
(86) International application number: PCT/EP2024/052933
(87) International publication number: WO 2024/188542

(56) References cited:
- EP-A1- 0 954 834
- US-B1- 6 829 476

## Description

### Field of the Invention

The present invention relates to a system in a telecommunications network and a method of retrofitting a system in a telecommunications network.

### Background

A telecommunications network typically comprises network equipment which consumes energy during operation. An overall energy consumption of a telecommunications network is a sum of the energy consumption of all network equipment in the telecommunications network. If the telecommunications network includes a mass deployment of network equipment (e.g. thousands, tens of thousands or hundreds of thousands of network equipment) then the overall energy consumption may be extremely high. It is desirable to reduce this overall energy consumption.

One method of reducing the overall energy consumption is to utilise an optional energy saving mode at one or more network equipment. The energy saving mode reduces the amount of energy consumed by the network equipment by, for example, reducing its transmission power and/or processing capabilities. An energy saving mode has been standardised in wireless wide area telecommunications, such as by the 3^{rd} Generation Partnership Project (3GPP).

European Patent Application Publication No. 0954834 A1 discloses a pager-based controller including at least one pager configured to receive a signal from a remote location, the at least one pager being further configured to provide an output to change an on-off state of an external electrical component.

US Patent No. 6829476 B1 discloses a pager-based controller including at least one pager configured to receive a signal from a remote location, the at least one pager being further configured to provide an output to control an on-off state of a valve actuator.

### Summary of the Invention

According to a first aspect of the invention, there is provided a method as claimed in Claim 1.

The system may comprise a plurality of network equipment and a plurality of power supply circuits, wherein each power supply circuit is provided between a respective output of the plurality of outputs of the power supply unit and a respective network equipment of the plurality of network equipment, and the method may further comprise the steps of: modifying each power supply circuit to comprise a respective switching unit configured to switch between an open state and a closed state; isolating the control circuit and each power supply circuit of the plurality of power supply circuits using a respective isolator; and configuring the controller to, in response to a command to control one or more of the plurality of switching units, selectively control the one or more of the plurality of switching units in the command to cause the controlled one or more of the plurality of switching units to switch between the open state and the closed state.

The method may further comprise the steps of: connecting the controller to a remote computing device, wherein the controller is configured to receive, from the remote computing device, one or more of: the command to control the switching unit or the one or more of the plurality of switching units, an instruction to update command generation logic, and an instruction to cease operation.

According to a second aspect of the invention, there is provided a method as claimed in Claim 6.

The method may further comprise the step of: connecting each respective controller of the plurality of systems to a remote computing device, wherein each respective controller is configured to receive, from the remote computing device, one or more of: the command to control the respective switching unit or the one or more of the plurality of respective switching units, an instruction to update command generation logic, and an instruction to cease operation.

According to a third aspect of the invention, there is provided a system as claimed in Claim 8.

The switching unit may comprise a first switch and a second switch, the first and second switches each being configured to switch between an open state and a closed state, and the controller may be configured to, in response to the command to control the switching unit, control the first and second switches of the switching unit to cause the controlled first and second switches of the switching unit to switch between the open and closed state.

The network equipment may be one of a plurality of network equipment, the power supply circuit may be one of a plurality of power supply circuits, wherein each power supply circuit may be provided between a respective output of the plurality of outputs of the power supply unit and a respective network equipment of the plurality of network equipment, each power supply circuit comprising a respective switching unit, the isolator may be one of a plurality of isolators, each isolating the control circuit from a respective power supply circuit of the plurality of power supply circuits, wherein, in response to the command to control one or more of the plurality of switching units, the controller may selectively control the one or more of the plurality of switching units in the command causing the controlled one or more of the plurality of switching units to switch between the open state and closed state.

Each respective switching unit may comprise a first switch and a second switch, the first and second switches of each respective switching unit being configured to switch between an open state and a closed state, and configuring the controller to, in response to the command to control one or more of the plurality of switching units, selectively control the first and second switches of the one or more of the plurality of switching units in the command to cause the controlled first and second switches of the one or more of the plurality of switching units to switch between the open state and closed state.

The controller may be configured to receive a message including one or more of: the command to control the switching unit or the one or more of the plurality of switching units, an instruction to update command generation logic, and an instruction to cease operation.

According to a fourth aspect of the invention, there is provided a plurality of systems as claimed in Claim 13.

Each respective controller of the plurality of systems may be configured to receive a message including one or more of: the command to control the respective switching unit or the one or more of the plurality of respective switching units, an instruction to update command generation logic, and an instruction to cease operation.

The system or plurality of systems may further comprise a remote computing device, wherein the or each respective controller receives the message from the remote computing device.

The or each controller may comprise a human interface device, and the or each controller may receive the message from the human interface device.

The or each controller may comprise a first controller module and a second controller module, wherein: the or each respective first controller module may be configured to receive the message, and the or each respective second controller module may be configured to, in response to the command to control the respective switching unit or one or more of the plurality of respective switching units: control the respective switching unit causing the controlled respective switching unit to switch between the open state and closed state, control the first and second switches of the respective switching unit causing the controlled first and second switches of the respective switching unit to switch between the open state and closed state, selectively control the one or more of the plurality of respective switching units in the command causing the controlled one or more of the plurality of respective switching units to switch between the open and closed state, or selectively control the first and second switches of the one or more of the plurality of respective switching units in the command to cause the controlled first and second switches of the one or more of the plurality of respective switching units to switch between the open state and the closed state.

The or each respective first controller module may comprise a communications interface for receiving the message from the remote computing device and may be configured to cause the or each respective second controller module to implement the command or instruction included in the message.

The or each respective first controller module may comprise a human interface device interface for receiving the message from the human interface device, and the or each first controller module may be configured to cause the second controller module to implement the command or instruction included in the message.

The controller, each respective controller, the second controller module or each respective second controller module may comprise a processor configured to implement logic for generating the command.

The switching unit or each respective switching unit may be in a closed state by default.

The switching unit may comprise one or more of: a contactor, and a relay.

The or each network equipment may be a Remote Radio Unit, RRU, or Base Band Unit, BBU.

The controller or each respective controller may be a Single Board Computer, SBC.

The first controller module, each respective first controller module, the second controller module or each respective second controller module may be a Single Board Computer, SBC.

### Brief Description of the Figures

In order that the present invention may be better understood, embodiments thereof will now be described, by way of example only, with reference to the accompanying drawings in which:
Figure 1 is a schematic diagram of a telecommunications network;
Figure 2 is a schematic diagram of a system, including the telecommunications network of Figure 1 and energy saving equipment;
Figure 3 is a flow diagram of a method of retrofitting the telecommunications network with the energy saving equipment; and
Figure 4 is a flow diagram of a method of controlling power supply to one or more network equipment of the telecommunications network.

### Detailed Description

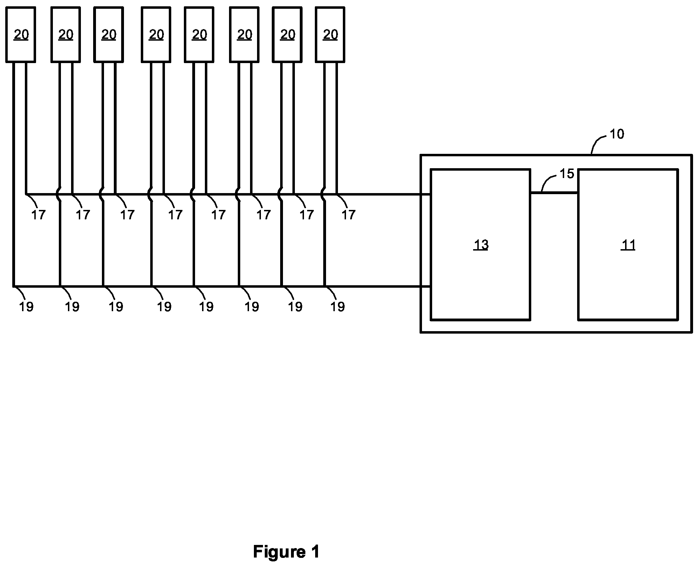

Figure 1 illustrates a telecommunications network. The telecommunications network includes a power supply unit 10. The power supply unit 10 includes a Direct Current (DC) Distribution Unit (DU) 11, which receives electrical power from an external source (not shown). The power supply unit 10 also includes a first DC to DC converter 13. The DC-DU provides a 54V power supply to the first DC to DC converter 13, via power cable 15, which is converted to a 12V (6-10A) power supply. The first DC to DC converter 13 has a plurality of outputs (in this example, 10 outputs), each providing the 12V power supply and comprising a negative connection 17 and a positive connection 19.

Figure 1 illustrates a plurality of active networking equipment 20 (in this example, a plurality of Remote Radio Units (RRUs)), each connected to the negative connection 17 and positive connection 19 of an output of the plurality of outputs. A power supply circuit is thus formed for each RRU 20 of the plurality of RRUs 20 between the negative connection 17 and positive connection 19 of an output of the plurality of outputs of the power supply unit 10.

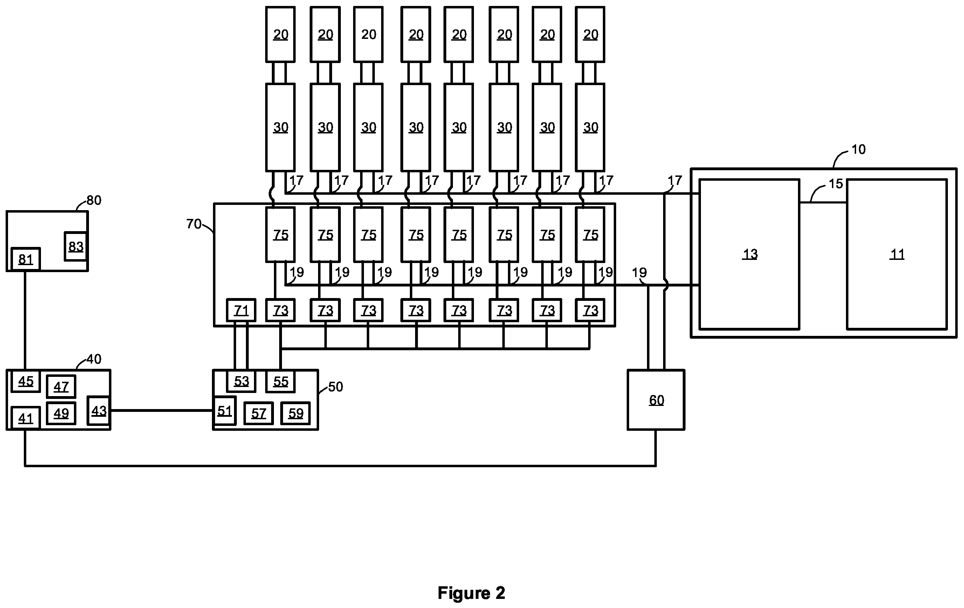

Figure 2 illustrates the telecommunications network having been retrofitted with energy saving equipment. Figure 2 illustrates the power supply unit 10 and the plurality of RRUs 20 of the telecommunications network. The energy saving equipment includes a plurality of contactors 30, a first controller module 40, a second controller module 50, a second DC to DC converter 60, a relay board 70 and a remote computing device 80.

A contactor 30 of the plurality of contactors 30 is connected between an RRU 20 of the plurality of RRUs 20 and the negative connection 17 of an output the plurality of outputs of the power supply unit 10. The contactor 30 is therefore part of the RRU's power supply circuit. The contactor 30 may selectively switch between a closed state and an open state. In this example, each contactor 30 of the plurality of contactors 30 is a normally energised normally-open contactor.

The relay board 70 includes a power supply interface 71, a plurality of opto-isolators 73 and a plurality of relays 75. A relay 75 of the plurality of relays 75 is connected between a contactor 30 of the plurality of contactors 30 and the positive connection 19 of an output of the plurality of outputs of the power supply unit 10. The relay 75 may also selectively switch between a closed state and an open state. In this example, each relay 75 of the plurality of relays 75 is a normally de-energised normally-closed relay.

A power supply circuit of an RRU 20 of the plurality of RRUs 20 is therefore formed (following retrofitting as shown in Figure 2) between the negative connection 17 of the respective output of the plurality of outputs of the power supply unit 10, a respective contactor 30 of the plurality of contactors 30, a respective relay 75 of the plurality of relays 75, and a positive connection 19 of the respective output of the plurality of outputs of the power supply unit 10.

The first controller module 40 includes a power supply interface 41, a Universal Serial Bus (USB) interface 43, a communications interface 45, a processor 47 and memory 49. The power supply interface 41 is connected to an output of the plurality of outputs of the power supply unit 10 via the second DC to DC converter. This power supply is described in more detail below. The USB interface 43 of the first controller module 40 is suitable for power supply from the first controller module 40 to any devices connected thereto and suitable for data communications with any devices connected thereto. The communications interface 45 is an Ethernet connection interface (e.g. RJ45) and is therefore suitable for data communications with any devices connected thereto.

The second controller module 50 includes a USB interface 51, a power supply interface 53, a control signal interface 55, a processor 57 and memory 59. The USB interface 51 of the second controller module 50 connects to the USB interface 43 of the first controller module 40 via a USB cable. This USB connection provides power from the first controller module 40 to the second controller module 50 and enables data communication between the first and second controller modules 40, 50. The power supply interface 53 of the second controller module 50 is suitable for power supply from the second controller module 50 to the power supply interface 71 of the relay board 70. The first controller module 40, second controller module 50 and relay board 70 (and all components thereof) are therefore all powered by the output of the plurality of outputs of the power supply unit 10, as converted by the second DC to DC converter 60.

The control signal interface 55 of the second controller module 50 enables a control signal to be selectively communicated to one or more of the plurality of opto-isolators 73 of the relay board 70. The control signal interface 55 of the second controller module 50 is connected to the plurality of opto-isolators 73 by a ribbon cable.

A control circuit is thus formed between the output of the plurality of outputs of the power supply unit 10, the second DC to DC converter 60, the first controller module 40, the second controller module 50 and the relay board 70. The control circuit (including the first controller module 40, second controller module 50 and relay board 70, and all components thereof) have a power supply requirement that is less than the power supply of each output of the plurality of outputs of the power supply unit 10. In this example, the electrical potential difference requirement of the control circuit is less than the electrical potential difference of the power supply of the output of the plurality of outputs of the power supply unit 10. The second DC to DC converter 60 is therefore provided in the control circuit to convert the 12V power supply of the power supply unit 10 to a 5V power supply required by the control circuit. That is, the second DC to DC converter 60 is connected to the positive and negative connections 19, 17 of an output of the plurality of outputs of the power supply unit 10 and converts the 12V power supply of the power supply unit 10 to a 5V power supply required by the first controller module 40. This 5V power supply is provided to the power supply interface 41 of the first controller module 40.

The control circuit and power supply circuit of each RRU 20 are coupled by a respective opto-isolator 73 of the plurality of opto-isolators 73, which enable the control signal to be transferred from the control circuit to the power supply circuit but prevent electrical power from transferring from the power supply circuit to the control circuit.

A remote computing device 80 is also provided having a communications interface 81 and a human interface device interface 83. The communications interface 81 is an Ethernet connection interface (e.g. RJ45) and is connected to the communications interface 45 of the first controller module 40. The human interface device interface 83 enables connection to a human interface device or plurality of human interface devices (such as a keyboard, mouse, tablet, touchscreen, etc.) enabling an operative to provide instructions to the remote computing device 80, which may then be transferred via the communications interface 81 to the first controller module 40. This will be explained in more detail below.

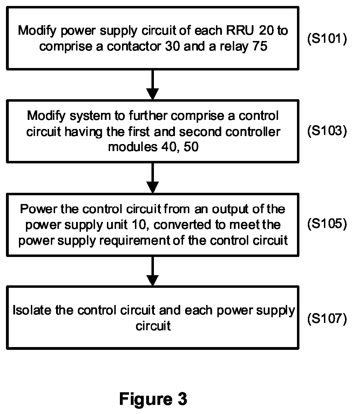

Figure 3 is a flow diagram illustrating a method of retrofitting. In a first step S101, a power supply circuit of each RRU 20 of the plurality of RRUs 20 is modified so as to comprise a switching unit (comprising a contactor 30 and a relay 75). In step S103, a control circuit is introduced, the control circuit comprising a controller (comprising the first controller module 40 and the second controller module 50) and having a power supply requirement. In step S105, the control circuit is powered by connecting the control circuit to an output of the plurality of outputs of the power supply unit 10 and converting the power supply of the output of the plurality of outputs of the power supply unit 10 so as to meet the power supply requirement of the control circuit. In step S107, the control circuit is connected to each power supply circuit via a respective opto-isolator 73, enabling the control circuit to selectively transmit a control signal to a respective power supply circuit of one or more RRUs 20 of the plurality of RRUs 20.

Following retrofitting, a power supply circuit of each RRU 20 of the plurality of RRUs 20 may be selectively switched from the closed state (in which it receives the 12V power supply from the power supply unit 10) to the open state (in which it is does not receive the 12V power supply from the power supply unit 10) upon activation of the contactor 30 and relay 75 of that power supply circuit.

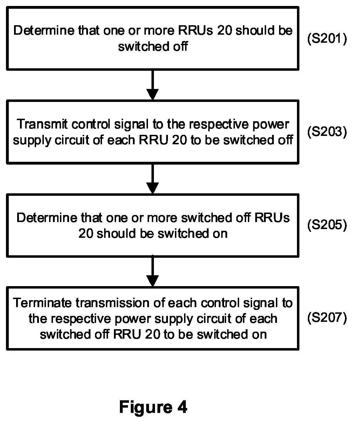

In a default state (i.e. in the absence of a control signal) of each power supply circuit, a relay 75 (being a normally de-energised normally closed relay) of the power supply circuit is in a closed state. The respective contactor 30 (being a normally energised normally open contactor) of the power supply circuit is therefore activated and in a closed state. The power supply circuit is therefore closed, and power is supplied to the respective RRU 20. The power supply circuit is therefore in a closed state by default, and may be selectively switched to the open state by operation of the control circuit (which will now be described with reference to the method illustrated in Figure 4).

In step S201, the processor 57 of the second controller module 50 determines that one or more RRUs 20 of the plurality of RRUs 20 should be switched off (i.e. powered down). This determination may be the output of, for example:
- Logic (stored in memory 59) of the second controller module 50 that determines that the one or more RRUs 20 should be switched off, or
- An instruction signal from the first controller module 40 (or the remote computing device 80 via the first controller module 40) to switch off the one or more RRUs 20.

In response, in step S203, the second controller module 50 transmits a control signal to each opto-isolator 73 of the respective power supply circuit of each RRU 20 to be switched off. Each opto-isolator allows the control signal to be transferred from the control circuit to the respective power supply circuit of the respective RRU 20 to be switched off. On receipt of the control signal, the respective relay 75 (being a normally de-energised normally closed relay) is activated and switches from its default closed state to an open state, opening the respective power supply circuit. In response, the respective contactor 30 (being a normally-energised normally open contactor) is deactivated and opens. Provision of the control signal to the respective power supply circuit of an RRU 20 to be switched off therefore selectively switches the power supply circuit from its default closed state to an open state, preventing power supply to the respective RRU 20.

In step 205, the processor 57 of the second controller module 50 determines that one or more RRUs of the plurality of RRUs that are switched off should now be switched on (i.e. powered-up). Again, this determination may be the output of, for example:
- Logic (stored in memory 59) of the second controller module 50 that determines that the one or more switched off RRUs 20 should be switched on, or
- An instruction signal from the first controller module 40 (or the remote computing device 80 via the first controller module 40) to switch on the one or more switched off RRUs 20.

In step S207, the second controller module 50 terminates transmission of each control signal to the respective power supply circuit of each switched off RRU 20 to be switched on. On termination of the control signal, the respective relay 75 is deactivated and switches from the open state to its default closed state, closing the respective power supply circuit. In response, the respective contactor 30 is activated and closes. Termination of the control signal to the respective power supply circuit of a switched off RRU 20 therefore selectively switches the power supply circuit from the open state to its default closed state, restoring power supply to the respective RRU 20.

The second controller module 50 may locally-store (e.g. in memory 59) logic such that the energy saving equipment may autonomously control each RRU 20 of the plurality of RRUs 20 by determining that the one or more RRUs 20 of the plurality of RRUs should be switched off and transmitting a control signal to each respective power supply circuit. The second controller module 50 may obtain sensor and/or environmental data (e.g. from a sensor on the RRU 20) and the logic may be based on this sensor and/or environmental data. For example, the logic may determine that an RRU 20 should be switched off if its load is less than a threshold amount. This logic may be updated on receipt of an instruction message from the first controller module 40 (or the remote computing device 80 via the first controller module 40).

The first controller module 40 may include a human interface device interface (not shown) enabling an operative to provide instructions to the first controller module 40. Similarly, as noted above, the first controller module 40 may receive instructions input to a human interface device connected to the human interface device interface 83 of the remote computing device 80. The first controller module 40 may transmit an instruction signal to the second controller module 50 based on these instructions. The instruction signal may instruct the second controller module 50 to switch off one or more RRUs 20, update the logic of the second controller module 50 for autonomously controlling the RRUs 20, and/or cease control of the RRUs 20 (i.e. override/shutdown operation).

The energy saving equipment therefore enables power control of each network equipment of the telecommunications network by a retrofitted solution. That is, all components of the energy saving equipment can be introduced to the network equipment and be powered by the same power supply unit that provides power to the network equipment. Furthermore, the first and second controller modules (which may autonomously control the network equipment and provide a communications interface for remote power control) may be implemented on Single Board Computers (SBCs), which are low-cost, configurable and have a small form factor, which compliments a retrofitted solution. These SBCs tend to have a lower power supply requirement relative to the network equipment that they control. This is addressed in two ways. Firstly, a converter is used to convert the power supply of the power supply unit so as to satisfy the power supply requirement of the SBCs, such that no further power supply is required. Secondly, an isolator is used between each power supply circuit of the network equipment and the control circuit of the SBCs to ensure the relatively high power supply of the power supply circuit does not damage the SBCs.

The energy saving equipment has benefits over the energy saving modes currently used in telecommunications networks. These energy saving modes require the network equipment to switch from a normal mode of operation to a lower (energy saving) mode of operation. However, the network equipment still consume power in the energy saving mode of operation. In contrast, the energy saving equipment described above opens the power supply circuit and therefore prevents any power being supplied to the network equipment. The energy saving equipment therefore provides greater energy saving performance relative to these energy saving modes.

The energy saving equipment may be retrofitted to each system of a plurality of systems (each system comprising a power supply unit 10 and a plurality of RRUs 20), such that the power supply to one or more RRUs of each system may be controlled by the energy saving equipment. The controller modules of each retrofitted system may be communicatively connected (e.g. via the remote computing device 80 or by other means), such that a first set of RRUs of a first system and a second set of RRUs of a second system may be selectively controlled at the same time (e.g. contemporaneously switched off and/or contemporaneously switched on). This is particularly suitable when RRUs of the first and second systems typically cooperate when in operation.

As noted above, the default state of the relays 75 and contactors 30 is such that, in the absence of a control signal, the power supply circuit is closed. This has the benefit that the power supply circuit will operate in the same way as the unmodified version in the event the second controller module 50 loses functionality (for example, if the second controller module 50 receives an instruction signal to cease control or if the second controller module 50 is disconnected from the output of the plurality of outputs of the power supply unit 10). However, this is non-essential and any form of relay and any form of contactor may be used. Furthermore, it is non-essential that both the relay and contactor are used, and the power supply circuit may be modified so as to include one of the contactor or relay. However, the use of both the relay and contactor is preferable as the contactor is better suited to relatively high power supply equipment and has a relatively long lifespan.

An opto-isolator 73 is used to isolate the control circuit and the power supply circuit. However, any form of isolator may be used instead, such as a transformer-based isolator or a capacitor-coupled isolator.

As noted above, the first and second controller modules 40, 50 may be implemented as SBCs, such as a Raspberry Pi or Arduino Uno. However, this is non-essential and any form of computing device may be used. Furthermore, a single controller may be provided having the functionality of the first and second controller modules 40, 50. The remote computing device 80 is also non-essential, as the controller may act autonomously, but this has the benefit of enabling remote communication with the controller (so as to update the logic on the controller, cause the controller to transmit a control signal to one or more RRUs, or cease operation).

The use of wired connections between all components in the energy saving equipment (including between the first controller module 40 and the remote computing device 80) is particularly suitable for its application to control the power supply to a plurality of RRUs as this network equipment is often contained in a faraday cage. However, the skilled person will understand that the energy saving equipment may be used to control the power supply to one or more network equipment of any type (in particular, a network equipment that may be switched from a completely powered-down state and a powered-up state and remain operational in its powered up state). For example, the network equipment may be a Base Band Unit (BBU) in a wireless wide area network.

Furthermore, the energy saving equipment may be used to control the power supply to a single network equipment.

The skilled person will understand that the values of the power supply characteristics used above are an example, and any other value may be used instead. The power supply requirement of the control circuit may differ to the power supply of an output of the plurality of outputs due to a different voltage, current, and/or other characteristic. Furthermore, it is non-essential that the power supply requirement of the control circuit is less than the power supply of an output of the plurality of outputs of the power supply unit. The power supply requirement of the control circuit may be more than the power supplied by the output of the plurality of outputs of the power supply unit, such that the isolator prevents the relative high power control circuit from damaging the network equipment.

The description above describes a method of retrofitting network equipment with an energy saving solution. However, the skilled person will understand that the energy saving solution may be implemented as part of the network equipment by initial design (that is, a system is produced by manufacture or assembly comprising the network equipment, power supply unit and the energy saving solution).

## Claims

1. A method of retrofitting a system, the system being in a telecommunications network and comprising a network equipment (20), a power supply unit (10), and a power supply circuit, wherein the power supply circuit is provided between a first output of a plurality of outputs of the power supply unit (10) and the network equipment (20), the method comprising the steps of:
modifying the power supply circuit to comprise a switching unit (30, 75) configured to switch between an open state and a closed state;
modifying the system to include a control circuit, wherein the control circuit comprises a controller having a power supply requirement;
powering the control circuit by:
connecting the control circuit to a second output of the plurality of outputs of the power supply unit (10), and
converting a power supply of the second output of the plurality of outputs of the power supply unit (10) to meet the power supply requirement of the controller (40, 50);
isolating the control circuit and power supply circuit using an isolator (73); and
configuring the controller (40, 50) to, in response to a command to control the switching unit (30, 75), control the switching unit (30, 75) to cause the controlled switching unit (30, 75) to switch between the open state and closed state.

2. A method as claimed in Claim 1, wherein:
the switching unit (30, 75) comprises a first switch (30) and a second switch (75), the first and second switches (30, 75) each being configured to switch between an open state and a closed state, and
the controller (40, 50) is configured to, in response to the command to control the switching unit (30, 75), control the first and second switches (30, 75) of the switching unit to cause the controlled first and second switches (30, 75) of the switching unit to switch between the open and closed state.

3. A method as claimed in any one of the preceding claims, wherein the system comprises a plurality of network equipment (20) and a plurality of power supply circuits, wherein each power supply circuit is provided between a respective output of the plurality of outputs of the power supply unit (10) and a respective network equipment (20) of the plurality of network equipment, the method further comprising the steps of:
modifying each power supply circuit to comprise a respective switching unit (30, 75) configured to switch between an open state and a closed state;
isolating the control circuit and each power supply circuit of the plurality of power supply circuits using a respective isolator (73); and
configuring the controller (40, 50) to, in response to a command to control one or more of the plurality of switching units (30, 75), selectively control the one or more of the plurality of switching units (30, 75) in the command to cause the controlled one or more of the plurality of switching units (30, 75) to switch between the open state and the closed state.

4. A method as claimed in Claim 3, wherein:
each respective switching unit (30, 75) comprises a first switch (30) and a second switch (75), the first and second switches (30, 75) of each respective switching unit being configured to switch between an open state and a closed state, and
configuring the controller to (40, 50), in response to the command to control one or more of the plurality of switching units (30, 75), selectively control the first and second switches (30, 75) of the one or more of the plurality of switching units in the command to cause the controlled first and second switches (30, 75) of the one or more of the plurality of switching units to switch between the open state and closed state.

5. A method as claimed in any one of the preceding claims, further comprising the steps of:
connecting the controller (40, 50) to a remote computing device (80), wherein the controller (40, 50) is configured to receive, from the remote computing device (80), one or more of:
the command to control the switching unit (30, 75) or the one or more of the plurality of switching units (30, 75),
an instruction to update command generation logic, and
an instruction to cease operation.

6. A method of retrofitting a plurality of systems, each system being retrofitted according to the method of any one of Claims 1 to 4, wherein the respective controller (40, 50) of each system is configured, in response to the command to control the respective switching unit (30, 75) or one or more of the plurality of respective switching units, to:
control the respective switching unit (30, 75) to cause the controlled respective switching unit to switch between the open state and closed state,
control the first and second switches (30, 75) of the respective switching unit to cause the activated first and second switches (30, 75) of the respective switching unit to switch between the open state and closed state,
selectively control the one or more of the plurality of respective switching units (30, 75) in the command to cause the activated one or more of the plurality of respective switching units (30, 75) to switch between the open and closed state, or
selectively control the first and second switches (30, 75) of the one or more of the plurality of respective switching units in the command to cause the activated first and second switches (30, 75) of the one or more of the plurality of respective switching units to switch between the open state and the closed state.

7. A method as claimed in Claim 6, further comprising the step of:
connecting each respective controller (40, 50) of the plurality of systems to a remote computing device (80), wherein each respective controller (40, 50) is configured to receive, from the remote computing device (80), one or more of:
the command to control the respective switching unit (30, 75) or the one or more of the plurality of respective switching units (30, 75),
an instruction to update command generation logic, and
an instruction to cease operation.

8. A system for a telecommunications network, the system comprising:
a network equipment (20);
a power supply unit (10);
a power supply circuit, wherein the power supply circuit is provided between a first output of a plurality of outputs of the power supply unit (10) and the network equipment (20), the power supply circuit comprising a switching unit (30, 75) configured to switch between an open state and a closed state;
a control circuit comprising a controller (40, 50) having a power supply requirement, wherein the control circuit is connected to a second output of the plurality of outputs of the power supply (10);
a converter (60) for converting the power supply of the second output of the plurality of outputs of the power supply unit (10) to meet the power supply requirement of the control circuit; and
an isolator (73) configured to isolate the control circuit and the power supply circuit,
wherein, in response to a command to control the switching unit (30, 75), the controller (40, 50) controls the switching unit (30, 75) causing the controlled switching unit (30, 75) to switch between the open state and closed state.

9. A system as claimed in Claim 8, wherein the switching unit (30, 75) comprises a first switch (30) and a second switch (75), the first and second switches (30, 75) each being configured to switch between an open state and a closed state, and, in response to the command to control the switching unit (30, 75), the controller (40, 50) controls the first and second switches (30, 75) of the switching unit to cause the controlled first and second switches (30, 75) of the switching unit to switch between the open and closed state.

10. A system as claimed in Claim 8 or Claim 9, wherein:
the network equipment (20) is one of a plurality of network equipment,
the power supply circuit is one of a plurality of power supply circuits, wherein each power supply circuit is provided between a respective output of the plurality of outputs of the power supply unit (10) and a respective network equipment (20) of the plurality of network equipment, each power supply circuit comprising a respective switching unit (30, 75),
the isolator (73) is one of a plurality of isolators, each isolating the control circuit from a respective power supply circuit of the plurality of power supply circuits,
wherein, in response to the command to control one or more of the plurality of switching units (30, 75), the controller (40, 50) selectively controls the one or more of the plurality of switching units (30, 75) in the command causing the controlled one or more of the plurality of switching units (30, 75) to switch between the open state and closed state.

11. A system as claimed in Claim 10, wherein:
each respective switching unit (30, 75) comprises a first switch (30) and a second switch (75), the first and second switches (30, 75) of each respective switching unit being configured to switch between an open state and a closed state, and, in response to the command to control one or more of the plurality of switching units, the controller (40, 50) selectively controls the first and second switches (30, 75) of the one or more of the plurality of switching units in the command to cause the controlled first and second switches (30, 75) of the one or more of the plurality of switching units to switch between the open state and closed state.

12. A system as claimed in any one of Claims 8 to 11, wherein the controller (40, 50) is configured to receive a message including one or more of:
the command to control the switching unit (30, 75) or the one or more of the plurality of switching units (30, 75),
an instruction to update command generation logic, and
an instruction to cease operation.

13. A plurality of systems, each system of the plurality of systems being a system as claimed in any one of Claims 8 to 11, wherein, in response to the command to control the respective switching unit (30, 75) or one or more of the plurality of respective switching units (30, 75), the respective controller of each system:
controls the respective switching unit (30, 75) causing the controlled respective switching unit (30, 75) to switch between the open state and closed state,
controls the first and second switches (30, 75) of the respective switching unit causing the controlled first and second switches (30, 75) of the respective switching unit to switch between the open state and closed state,
selectively controls the one or more of the plurality of respective switching units (30, 75) in the command causing the controlled one or more of the plurality of respective switching units (30, 75) to switch between the open and closed state, or
selectively controls the first and second switches (30, 75) of the one or more of the plurality of respective switching units (30, 75) in the command to cause the controlled first and second switches (30, 75) of the one or more of the plurality of respective switching units to switch between the open state and the closed state.

14. A plurality of systems as claimed in Claim 13, wherein each respective controller (40, 50) of the plurality of systems is configured to receive a message including one or more of:
the command to control the respective switching unit (30, 75) or the one or more of the plurality of respective switching units (30, 75),
an instruction to update command generation logic, and
an instruction to cease operation.

15. A system or plurality of systems as claimed in either Claim 12 or Claim 14, further comprising a remote computing device (80), wherein the or each respective controller (40, 50) receives the message from the remote computing device (80).

16. A system or plurality of systems as claimed in any one of Claims 12, 14 or 15, wherein the or each controller (40, 50) comprises a human interface device (83), and the or each controller (40, 50) receives the message from the human interface device (83).

17. A system as claimed in Claim 12, or a plurality of systems as claimed in any one of Claims 14 to 16, wherein the or each controller comprises a first controller module (40) and a second controller module (50), wherein:
the or each respective first controller module (40) is configured to receive the message, and
the or each respective second controller module (50) is configured to, in response to the command to control the respective switching unit (30, 75) or one or more of the plurality of respective switching units:
control the respective switching unit (30, 75) causing the controlled respective switching unit (30, 75) to switch between the open state and closed state,
control the first and second switches (30, 75) of the respective switching unit causing the controlled first and second switches (30, 75) of the respective switching unit to switch between the open state and closed state,
selectively control the one or more of the plurality of respective switching units (30, 75) in the command causing the controlled one or more of the plurality of respective switching units (30, 75) to switch between the open and closed state, or
selectively control the first and second switches (30, 75) of the one or more of the plurality of respective switching units in the command to cause the controlled first and second switches (30, 75) of the one or more of the plurality of respective switching units to switch between the open state and the closed state.

18. A system or plurality of systems as claimed in Claim 17 when dependent on Claim 15, wherein the or each respective first controller module (40) comprises a communications interface (45) for receiving the message from the remote computing device (80) and is configured to cause the or each respective second controller module (50) to implement the command or instruction included in the message.

19. A system or plurality of systems as claimed in Claim 17 or Claim 18, as dependent on Claim 16, wherein the or each respective first controller module (40) comprises a human interface device interface for receiving the message from the human interface device, and the or each first controller module (40) is configured to cause the second controller module (50) to implement the command or instruction included in the message.

20. A system or plurality of systems as claimed in any one of Claims 8 to 19, wherein the controller (40, 50), each respective controller (40, 50), the second controller module (50) or each respective second controller module (50) comprises a processor configured to implement logic for generating the command.

21. A system or plurality of systems as claimed in any one of Claims 8 to 20, wherein the switching unit (30, 75) or each respective switching unit (30, 75) is in a closed state by default.

22. A system or plurality of systems as claimed in any one of Claims 8 to 20, wherein the switching unit (30, 75) comprises one or more of: a contactor, and a relay.

23. A system or plurality of systems as claimed in any one of Claims 8 to 22, wherein the or each network equipment (20) is a Remote Radio Unit, RRU, or Base Band Unit, BBU.

24. A system or plurality of systems as claimed in any one of Claims 8 to 23, wherein the controller (40, 50) or each respective controller (40, 50) is a Single Board Computer, SBC.

25. A system or plurality of systems as claimed in any one of Claims 17 to 19, or any one of Claims 20 to 24 when dependent on Claims 17 to 19, wherein the first controller module (40), each respective first controller module (40), the second controller module (50) or each respective second controller module (50) is a Single Board Computer, SBC.

## Patentansprüche

1. Verfahren zum Nachrüsten eines Systems, wobei sich das System in einem Telekommunikationsnetzwerk befindet und Netzwerkausrüstung (20), eine Energieversorgungseinheit (10) und eine Energieversorgungsschaltung umfasst, wobei die Energieversorgungsschaltung zwischen einem ersten Ausgang einer Mehrzahl von Ausgängen der Energieversorgungseinheit (10) und der Netzwerkausrüstung (20) bereitgestellt ist, wobei das Verfahren die folgenden Schritte umfasst:
Modifizieren der Energieversorgungsschaltung derart, dass sie eine Schalteinheit (30, 75) umfasst, die dafür konfiguriert ist, zwischen einem offenen Zustand und einem geschlossenen Zustand umzuschalten;
Modifizieren des Systems derart, dass es eine Steuerschaltung beinhaltet, wobei die Steuerschaltung eine Steuerung umfasst, die einen Energieversorgungsbedarf aufweist;
Versorgen der Steuerschaltung mit Energie durch:
Verbinden der Steuerschaltung mit einem zweiten Ausgang der Mehrzahl von Ausgängen der Energieversorgungseinheit (10), und
Umwandeln einer Energieversorgung des zweiten Ausgangs der Mehrzahl von Ausgängen der Energieversorgungseinheit (10), um den Energieversorgungsbedarf der Steuerung (40, 50) zu erfüllen;
Isolieren der Steuerschaltung und der Energieversorgungsschaltung mit Hilfe eines Isolators (73); und
Konfigurieren der Steuerung (40, 50) derart, dass sie in Reaktion auf einen Befehl zum Steuern der Schalteinheit (30, 75) die Schalteinheit (30, 75) derart steuert, dass die gesteuerte Schalteinheit (30, 75) veranlasst wird, zwischen dem offenen Zustand und dem geschlossenen Zustand umzuschalten.

2. Verfahren nach Anspruch 1, wobei:
die Schalteinheit (30, 75) einen ersten Schalter (30) und einen zweiten Schalter (75) umfasst, wobei der erste und der zweite Schalter (30, 75) jeweils dafür konfiguriert sind, zwischen einem offenen Zustand und einem geschlossenen Zustand umzuschalten, und
die Steuerung (40, 50) dafür konfiguriert ist, in Reaktion auf den Befehl zum Steuern der Schalteinheit (30, 75) den ersten und den zweiten Schalter (30, 75) der Schalteinheit derart zu steuern, dass der gesteuerte erste und zweite Schalter (30, 75) der Schalteinheit veranlasst werden, zwischen dem offenen Zustand und dem geschlossenen Zustand umzuschalten.

3. Verfahren nach einem der vorhergehenden Ansprüche, wobei das System eine Mehrzahl von Netzwerkausrüstungen (20) und eine Mehrzahl von Energieversorgungsschaltungen umfasst, wobei jede Energieversorgungsschaltung zwischen einem jeweiligen Ausgang der Mehrzahl von Ausgängen der Energieversorgungseinheit (10) und einer jeweiligen Netzwerkausrüstung (20) der Mehrzahl von Netzwerkausrüstungen bereitgestellt ist, wobei das Verfahren ferner die folgenden Schritte umfasst:
Modifizieren jeder Energieversorgungsschaltung derart, dass sie eine jeweilige Schalteinheit (30, 75) umfasst, die dafür konfiguriert ist, zwischen einem offenen Zustand und einem geschlossenen Zustand umzuschalten;
Isolieren der Steuerschaltung und jeder Energieversorgungsschaltung der Mehrzahl von Energieversorgungsschaltungen mithilfe eines jeweiligen Isolators (73); und
Konfigurieren der Steuerung (40, 50) derart, dass sie in Reaktion auf einen Befehl zum Steuern einer oder mehrerer der Mehrzahl von Schalteinheiten (30, 75) die eine oder mehreren der Mehrzahl von Schalteinheiten (30, 75) in dem Befehl selektiv derart steuert, dass die gesteuerte(n) eine oder mehreren der Mehrzahl von Schalteinheiten (30, 75) veranlasst wird/werden, zwischen dem offenen Zustand und dem geschlossenen Zustand umzuschalten.

4. Verfahren nach Anspruch 3, wobei:
jede jeweilige Schalteinheit (30, 75) einen ersten Schalter (30) und einen zweiten Schalter (75) umfasst, wobei der erste und der zweite Schalter (30, 75) jeder jeweiligen Schalteinheit dafür konfiguriert sind, zwischen einem offenen Zustand und einem geschlossenen Zustand umzuschalten, und
Konfigurieren der Steuerung (40, 50) dafür, in Reaktion auf den Befehl zum Steuern einer oder mehrerer der Mehrzahl von Schalteinheiten (30, 75) den ersten und den zweiten Schalter (30, 75) der einen oder mehreren der Mehrzahl von Schalteinheiten in dem Befehl selektiv derart zu steuern, dass der gesteuerte erste und zweite Schalter (30, 75) der einen oder mehreren der Mehrzahl von Schalteinheiten veranlasst wird/werden, zwischen dem offenen Zustand und dem geschlossenen Zustand umzuschalten.

5. Verfahren nach einem der vorhergehenden Ansprüche, das ferner die folgenden Schritte umfasst:
Verbinden der Steuerung (40, 50) mit einer fernen Rechenvorrichtung (80), wobei die Steuerung (40, 50) dafür konfiguriert ist, von der fernen Rechenvorrichtung (80) eines oder mehreres des Folgenden zu empfangen:
den Befehl zum Steuern der Schalteinheit (30, 75) oder der einen oder mehreren der Mehrzahl von Schalteinheiten (30, 75),
eine Anweisung zum Aktualisieren von Befehlserzeugungslogik, und
eine Anweisung zum Beenden des Betriebs.

6. Verfahren zum Nachrüsten einer Mehrzahl von Systemen, wobei jedes System gemäß dem Verfahren nach einem der Ansprüche 1 bis 4 nachgerüstet wird, wobei die jeweilige Steuerung (40, 50) jedes Systems dafür konfiguriert ist, in Reaktion auf den Befehl zum Steuern der jeweiligen Schalteinheit (30, 75) oder einer oder mehrerer der Mehrzahl von Schalteinheiten Folgendes zu tun:
Steuern der jeweiligen Schalteinheit (30, 75), um die gesteuerte jeweilige Schalteinheit zu veranlassen, zwischen dem offenen Zustand und dem geschlossenen Zustand umzuschalten,
Steuern des ersten und des zweiten Schalters (30, 75) der jeweiligen Schalteinheit, um den aktivierten ersten und zweiten Schalter (30, 75) der jeweiligen Schalteinheit zu veranlassen, zwischen dem offenen Zustand und dem geschlossenen Zustand umzuschalten,
selektives Steuern der einen oder mehreren der Mehrzahl jeweiliger Schalteinheiten (30, 75) in dem Befehl, um die aktivierte(n) eine oder mehreren der Mehrzahl jeweiliger Schalteinheiten (30, 75) zu veranlassen, zwischen dem offenen Zustand und dem geschlossenen Zustand umzuschalten, oder
selektives Steuern des ersten und des zweiten Schalters (30, 75) der einen oder mehreren der Mehrzahl jeweiliger Schalteinheiten in dem Befehl, um die aktivierten ersten und zweiten Schalter (30, 75) der einen oder mehreren der Mehrzahl jeweiliger Schalteinheiten zu veranlassen, zwischen dem offenen Zustand und dem geschlossenen Zustand umzuschalten.

7. Verfahren nach Anspruch 6, das ferner den folgenden Schritt umfasst:
Verbinden jeder jeweiligen Steuerung (40, 50) der Mehrzahl von Systemen mit einem fernen Rechenvorrichtung (80), wobei jede jeweilige Steuerung (40, 50) dafür konfiguriert ist, von dem fernen Rechenvorrichtung (80) eines oder mehreres des Folgenden zu empfangen:
den Befehl zum Steuern der jeweiligen Schalteinheit (30, 75) oder der einen oder mehreren der Mehrzahl von jeweiligen Schalteinheiten (30, 75),
eine Anweisung zum Aktualisieren von Befehlserzeugungslogik, und
eine Anweisung zum Beenden des Betriebs.

8. System für ein Telekommunikationsnetzwerk, wobei das System Folgendes umfasst:
eine Netzwerkausrüstung (20);
eine Energieversorgungseinheit (10);
eine Energieversorgungsschaltung, wobei die Energieversorgungsschaltung zwischen einem ersten Ausgang einer Mehrzahl von Ausgängen der Energieversorgungseinheit (10) und der Netzwerkausrüstung (20) bereitgestellt ist, wobei die Energieversorgungsschaltung eine Schalteinheit (30, 75) umfasst, die dafür konfiguriert ist, zwischen einem offenen Zustand und einem geschlossenen Zustand umzuschalten;
eine Steuerschaltung, die eine Steuerung (40, 50) umfasst, die einen Energieversorgungsbedarf aufweist, wobei die Steuerschaltung mit einem zweiten Ausgang der Mehrzahl von Ausgängen der Energieversorgungseinheit (10) verbunden ist;
einen Wandler (60) zum Umwandeln der Energieversorgung des zweiten Ausgangs der Mehrzahl von Ausgängen der Energieversorgungseinheit (10), um den Energieversorgungsbedarf der Steuerschaltung zu erfüllen; und
einen Isolator (73), der dafür konfiguriert ist, die Steuerschaltung und die Energieversorgungsschaltung zu isolieren,
wobei die Steuerung (40, 50) in Reaktion auf einen Befehl zum Steuern der Schalteinheit (30, 75) die Schalteinheit (30, 75) derart steuert, dass die gesteuerte Schalteinheit (30, 75) veranlasst wird, zwischen dem offenen Zustand und dem geschlossenen Zustand umzuschalten.

9. System nach Anspruch 8, wobei die Schalteinheit (30, 75) einen ersten Schalter (30) und einen zweiten Schalter (75) umfasst, wobei der erste und der zweite Schalter (30, 75) jeweils dafür konfiguriert sind, zwischen einem offenen Zustand und einem geschlossenen Zustand umzuschalten, und die Steuerung (40, 50) in Reaktion auf den Befehl zum Steuern der Schalteinheit (30, 75) den ersten und den zweiten Schalter (30, 75) der Schalteinheit derart steuert, dass der gesteuerte erste und zweite Schalter (30, 75) der Schalteinheit veranlasst werden, zwischen dem offenen Zustand und dem geschlossenen Zustand umzuschalten.

10. System nach Anspruch 8 oder Anspruch 9, wobei:
die Netzwerkausrüstung (20) eine von einer Mehrzahl von Netzwerkausrüstungen ist,
die Energieversorgungsschaltung eine von einer Mehrzahl von Energieversorgungsschaltungen ist, wobei jede Energieversorgungsschaltung zwischen einem jeweiligen Ausgang der Mehrzahl von Ausgängen der Energieversorgungseinheit (10) und einer jeweiligen Netzwerkausrüstung (20) der Mehrzahl von Netzwerkausrüstungen bereitgestellt ist, wobei jede Energieversorgungsschaltung eine jeweilige Schalteinheit (30, 75) umfasst,
der Isolator (73) einer von einer Mehrzahl von Isolatoren ist, die jeweils die Steuerschaltung von einer jeweiligen Energieversorgungsschaltung der Mehrzahl von Energieversorgungsschaltungen isolieren,
die Steuerung (40, 50) in Reaktion auf den Befehl zum Steuern einer oder mehrerer der Mehrzahl von Schalteinheiten (30, 75) die eine oder mehreren der Mehrzahl von Schalteinheiten (30, 75) in dem Befehl selektiv derart steuert, dass die gesteuerte(n) eine oder mehreren der Mehrzahl von Schalteinheiten (30, 75) veranlasst wird/werden, zwischen dem offenen Zustand und dem geschlossenen Zustand umzuschalten.

11. System nach Anspruch 10, wobei:
jede jeweilige Schalteinheit (30, 75) einen ersten Schalter(30) und einen zweiten Schalter (75) umfasst, wobei der erste und der zweite Schalter (30, 75) jeder jeweiligen Schalteinheit dafür konfiguriert sind, zwischen einem offenen Zustand und einem geschlossenen Zustand umzuschalten, und die Steuerung (40, 50) in Reaktion auf den Befehl zum Steuern einer oder mehrerer der Mehrzahl von Schalteinheiten den ersten und den zweiten Schalter (30, 75) der einen oder mehreren der Mehrzahl von Schalteinheiten in dem Befehl wahlweise derart steuert, dass der gesteuerte erste und zweite Schalter (30, 75) der einen oder mehreren der Mehrzahl von Schalteinheiten veranlasst wird/werden, zwischen dem offenen Zustand und dem geschlossenen Zustand umzuschalten.

12. System nach einem der Ansprüche 8 bis 11, wobei die Steuerung (40, 50) dafür konfiguriert ist, eine Nachricht zu empfangen die eines oder mehreres des Folgenden beinhaltet:
den Befehl zum Steuern der Schalteinheit (30, 75) oder der einen oder mehreren der Mehrzahl von Schalteinheiten (30, 75),
eine Anweisung zum Aktualisieren von Befehlserzeugungslogik, und
eine Anweisung zum Beenden des Betriebs.

13. Mehrzahl von Systemen, wobei jedes System der Mehrzahl von Systemen ein System nach einem der Ansprüche 8 bis 11 ist, wobei die jeweilige Steuerung jedes Systems in Reaktion auf den Befehl zum Steuern der jeweiligen Schalteinheit (30, 75) oder einer oder mehrerer der Mehrzahl jeweiliger Schalteinheiten (30, 75) Folgendes tut:
Steuern der jeweiligen Schalteinheit (30, 75), um die gesteuerte jeweilige Schalteinheit (30, 75) zu veranlassen, zwischen dem offenen Zustand und dem geschlossenen Zustand umzuschalten,
Steuern des ersten und des zweiten Schalters (30, 75) der jeweiligen Schalteinheit, was den gesteuerten ersten und zweiten Schalter (30, 75) der jeweiligen Schalteinheit veranlasst, zwischen dem offenen Zustand und dem geschlossenen Zustand umzuschalten,
selektives Steuern der einen oder mehreren der Mehrzahl jeweiliger Schalteinheiten (30, 75) in dem Befehl, was die gesteuerte(n) eine oder mehreren der Mehrzahl jeweiliger Schalteinheiten (30, 75) veranlasst, zwischen dem offenen Zustand und dem geschlossenen Zustand umzuschalten, oder
selektives Steuern des ersten und des zweiten Schalters (30, 75) der einen oder mehreren der Mehrzahl jeweiliger Schalteinheiten (30, 75) in dem Befehl, um die gesteuerten ersten und zweiten Schalter (30, 75) der einen oder mehreren der Mehrzahl jeweiliger Schalteinheiten zu veranlassen, zwischen dem offenen Zustand und dem geschlossenen Zustand umzuschalten.

14. Mehrzahl von Systemen nach Anspruch 13, wobei jede jeweilige Steuerung (40, 50) der Mehrzahl von Systemen dafür konfiguriert ist, eine Nachricht zu empfangen, die eines oder mehreres des Folgenden beinhaltet:
den Befehl zum Steuern der jeweiligen Schalteinheit (30, 75) oder der einen oder mehreren der Mehrzahl von jeweiligen Schalteinheiten (30, 75),
eine Anweisung zum Aktualisieren von Befehlserzeugungslogik, und
eine Anweisung zum Beenden des Betriebs.

15. System oder Mehrzahl von Systemen nach entweder Anspruch 12 oder Anspruch 14, ferner eine ferne Rechenvorrichtung (80) umfassend, wobei die oder jede jeweilige Steuerung(40, 50) die Nachricht von dem fernen Rechenvorrichtung (80) empfängt.

16. System oder Mehrzahl von Systemen nach einem der Ansprüche 12, 14 oder 15, wobei die oder jede Steuerung (40, 50) ein Eingabegerät (Human Interface Device) (83) umfasst und die oder jede Steuerung (40, 50) die Nachricht von dem Eingabegerät (83) empfängt.

17. System nach Anspruch 12 oder Mehrzahl von Systemen nach einem der Ansprüche 14 bis 16, wobei die oder jede Steuerung ein erste Steuerungsmodul (40) und ein zweites Steuerungsmodul (50) umfasst, wobei:
das oder jedes erste Steuerungsmodul (40) dafür konfiguriert ist, die Nachricht zu empfangen, und
das oder jedes zweite Steuerungsmodul (50) dafür konfiguriert ist, in Reaktion auf den Befehl zum Steuern der jeweiligen Schalteinheit (30, 75) oder einer oder mehrerer der Mehrzahl jeweiliger Schalteinheiten Folgendes zu tun:
Steuern der jeweiligen Schalteinheit (30, 75), was die gesteuerte jeweilige Schalteinheit (30, 75) veranlasst, zwischen dem offenen Zustand und dem geschlossenen Zustand umzuschalten,
Steuern des ersten und des zweiten Schalters (30, 75) der jeweiligen Schalteinheit, was den gesteuerten ersten und zweiten Schalter (30, 75) der jeweiligen Schalteinheit veranlasst, zwischen dem offenen Zustand und dem geschlossenen Zustand umzuschalten,
selektives Steuern der einen oder mehreren der Mehrzahl jeweiliger Schalteinheiten (30, 75) in dem Befehl, was die gesteuerte(n) eine oder mehreren der Mehrzahl jeweiliger Schalteinheiten (30, 75) veranlasst, zwischen dem offenen Zustand und dem geschlossenen Zustand umzuschalten, oder
selektives Steuern des ersten und des zweiten Schalters (30, 75) der einen oder mehreren der Mehrzahl jeweiliger Schalteinheiten in dem Befehl, um den/die gesteuerten ersten und zweiten Schalter (30, 75) der einen oder mehreren der Mehrzahl jeweiliger Schalteinheiten zu veranlassen, zwischen dem offenen Zustand und dem geschlossenen Zustand umzuschalten.

18. System oder Mehrzahl von Systemen nach Anspruch 17, wenn abhängig von Anspruch 15, wobei das oder jedes jeweilige erste Steuerungsmodul (40) eine Kommunikationsschnittstelle (45) zum Empfangen der Nachricht von der fernen Rechenvorrichtung (80) umfasst und dafür konfiguriert ist, das oder jedes jeweilige zweite Steuerungsmodul (50) zu veranlassen, den Befehl oder die Anweisung, der/die in der Nachricht enthalten ist, zu implementieren.

19. System oder Mehrzahl von Systemen nach Anspruch 17 oder Anspruch 18, wenn abhängig von Anspruch 16, wobei das oder jedes jeweilige erste Steuerungsmodul (40) ein Eingabegerät zum Empfangen der Nachricht von dem Eingabegerät umfasst und das oder jedes Steuerungsmodul (40) dafür konfiguriert ist, das zweite Steuerungsmodul (50) zu veranlassen, den Befehl oder die Anweisung, der/die in der Nachricht enthalten ist, zu implementieren.

20. System oder Mehrzahl von Systemen nach einem der Ansprüche 8 bis 19, wobei die Steuerung (40, 50), jede jeweilige Steuerung (40, 50), das zweite Steuerungsmodul (50) oder jedes jeweilige Steuerungsmodul (50) einen Prozessor umfasst, der dafür konfiguriert ist, Logik zum Erzeugen des Befehls zu implementieren.

21. System oder Mehrzahl von Systemen nach einem der Ansprüche 8 bis 20, wobei sich die Schalteinheit (30, 75) oder jede jeweilige Schalteinheit (30, 75) standardmäßig in einem geschlossenen Zustand befindet.

22. System oder Mehrzahl von Systemen nach einem der Ansprüche 8 bis 20, wobei die Schalteinheit (30, 75) eines oder mehreres des Folgenden umfasst: ein Schütz und ein Relais.

23. System oder Mehrzahl von Systemen nach einem der Ansprüche 8 bis 22, wobei die oder jede Netzwerkausrüstung (20) eine RRU, Remote Radio Unit, oder eine BBU, Base Band Unit, ist.

24. System oder Mehrzahl von Systemen nach einem der Ansprüche 8 bis 23, wobei die Steuerung (40, 50) oder jede jeweilige Steuerung (40, 50) ein SBC, Single Board Computer, ist.

25. System oder Mehrzahl von Systemen nach einem der Ansprüche 17 bis 19 oder nach einem der Ansprüche 20 bis 24, wenn abhängig von den Ansprüchen 17 bis 19, wobei das erste Steuerungsmodul (40), jedes jeweilige erste Steuerungsmodul (40), das zweite Steuerungsmodul (50) oder jedes jeweilige zweite Steuerungsmodul (50) ein SBC, Single Board Computer, ist.

## Revendications

1. Procédé de mise à niveau d'un système, le système étant dans un réseau de télécommunications et comprenant un équipement de réseau (20), une unité d'alimentation électrique (10) et un circuit d'alimentation électrique, le circuit d'alimentation électrique étant prévu entre une première sortie d'une pluralité de sorties de l'unité d'alimentation électrique (10) et de l'équipement de réseau (20), le procédé comprenant les étapes de :
modification du circuit d'alimentation électrique afin qu'il comprenne une unité de commutation (30, 75) configurée pour commuter entre un état ouvert et un état fermé ;
modification du système afin qu'il comporte un circuit de commande, le circuit de commande comprenant un dispositif de commande ayant un besoin en alimentation électrique ;
alimentation du circuit de commande par :
connexion du circuit de commande à une deuxième sortie de la pluralité de sorties de l'unité d'alimentation électrique (10), et
conversion d'une alimentation électrique de la deuxième sortie de la pluralité de sorties de l'unité d'alimentation électrique (10) de manière qu'elle satisfasse au besoin en alimentation électrique du dispositif de commande (40, 50) ;
isolation du circuit de commande et du circuit d'alimentation électrique au moyen d'un isolateur (73) ; et
configuration du dispositif de commande (40, 50) pour, en réponse à une commande visant à commander l'unité de commutation (30, 75), commander l'unité de commutation (30, 75) afin d'amener l'unité de commutation commandée (30, 75) à commuter entre l'état ouvert et l'état fermé.

2. Procédé selon la revendication 1, dans lequel :
l'unité de commutation (30, 75) comprend un premier commutateur (30) et un deuxième commutateur (75), les premier et deuxième commutateurs (30, 75) étant chacun configurés pour commuter entre un état ouvert et un état fermé, et
le dispositif de commande (40, 50) est configuré pour, en réponse à la commande visant à commander l'unité de commutation (30, 75), commander les premier et deuxième commutateurs (30, 75) de l'unité de commutation afin d'amener les premier et deuxième commutateurs commandés (30, 75) de l'unité de commutation à commuter entre l'état ouvert et l'état fermé.

3. Procédé selon l'une quelconque des revendications précédentes, dans lequel le système comprend une pluralité d'équipements de réseau (20) et une pluralité de circuits d'alimentation électrique, chaque circuit d'alimentation électrique étant prévu entre une sortie respective de la pluralité de sorties de l'unité d'alimentation électrique (10) et un équipement de réseau (20) respectif de la pluralité d'équipements de réseau, le procédé comprenant en outre les étapes de :
modification de chaque circuit d'alimentation électrique afin qu'il comprenne une unité de commutation respective (30, 75) configurée pour commuter entre un état ouvert et un état fermé ;
isolation du circuit de commande et de chaque circuit d'alimentation électrique de la pluralité de circuits d'alimentation électrique au moyen d'un isolateur respectif (73) ; et
configuration du dispositif de commande (40, 50) pour, en réponse à une commande visant à commander une ou plusieurs unités de la pluralité d'unités de commutation (30, 75), commander de manière sélective lesdites une ou plusieurs unités de la pluralité d'unités de commutation (30, 75) présentes dans la commande afin d'amener lesdites une ou plusieurs unités commandées de la pluralité d'unités de commutation (30, 75) à commuter entre l'état ouvert et l'état fermé.

4. Procédé selon la revendication 3, dans lequel :
chaque unité de commutation respective (30, 75) comprend un premier commutateur (30) et un deuxième commutateur (75), les premier et deuxième commutateurs (30, 75) de chaque unité de commutation respective étant chacun configurés pour commuter entre un état ouvert et un état fermé, et
le dispositif de commande (40, 50) est configuré pour, en réponse à la commande visant à commander une ou plusieurs unités de la pluralité d'unités de commutation (30, 75), commander de manière sélective les premier et deuxième commutateurs (30, 75) desdites une ou plusieurs unités de la pluralité d'unités de commutation présentes dans la commande afin d'amener les premier et deuxième commutateurs commandés (30, 75) desdites une ou plusieurs unités de la pluralité d'unités de commutation à commuter entre l'état ouvert et l'état fermé.

5. Procédé selon l'une quelconque des revendications précédentes, comprenant en outre les étapes de :
connexion du dispositif de commande (40, 50) à un dispositif informatique distant (80), le dispositif de commande (40, 50) étant configuré pour recevoir, en provenance du dispositif informatique distant (80), une ou plusieurs de :
la commande visant à commander l'unité de commutation (30, 75) ou lesdites une ou plusieurs unités de la pluralité d'unités de commutation (30, 75),
une instruction pour mettre à jour une logique de génération de commande, et
une instruction pour cesser le fonctionnement.

6. Procédé de remise à niveau d'une pluralité de systèmes, chaque système étant remis à niveau conformément au procédé selon l'une quelconque des revendications 1 à 4, dans lequel le dispositif de commande respectif (40, 50) de chaque système est configuré pour, en réponse à la commande visant à commander l'unité de commutation respective (30, 75) ou une ou plusieurs unités de la pluralité d'unités de commutation respectives :
commander l'unité de commutation respective (30, 75) afin d'amener l'unité de commutation respective commandée à commuter entre l'état ouvert et l'état fermé,
commander les premier et deuxième commutateurs (30, 75) de l'unité de commutation respective afin d'amener les premier et deuxième commutateurs activés (30, 75) de l'unité de commutation respective à commuter entre l'état ouvert et l'état fermé,
commander de manière sélective lesdites une ou plusieurs unités de la pluralité d'unités de commutation respectives (30, 75) présentes dans la commande afin d'amener lesdites une ou plusieurs unités activées de la pluralité d'unités de commutation respectives (30, 75) à commuter entre l'état ouvert et l'état fermé, ou
commander de manière sélective les premier et deuxième commutateurs (30, 75) desdites une ou plusieurs unités de la pluralité d'unités de commutation respectives présentes dans la commande afin d'amener les premier et deuxième commutateurs activés (30, 75) desdites une ou plusieurs unités de la pluralité d'unités de commutation respectives à commuter entre l'état ouvert et l'état fermé.

7. Procédé selon la revendication 6, comprenant en outre l'étape de :
connexion de chaque dispositif de commande respectif (40, 50) à la pluralité de systèmes à un dispositif informatique distant (80), chaque dispositif de commande respectif (40, 50) étant configuré pour recevoir, en provenance du dispositif informatique distant (80), une ou plusieurs de :
la commande visant à commander l'unité de commutation respective (30, 75) ou lesdites une ou plusieurs unités de la pluralité d'unités de commutation respectives (30, 75),
une instruction pour mettre à jour une logique de génération de commande, et
une instruction pour cesser le fonctionnement.

8. Système pour un réseau de télécommunications, le système comprenant :
un équipement de réseau (20) ;
une unité d'alimentation électrique (10) ;
un circuit d'alimentation électrique, lequel circuit d'alimentation électrique est prévu entre une première sortie d'une pluralité de sorties de l'unité d'alimentation électrique (10) et de l'équipement de réseau (20), le circuit d'alimentation électrique comprenant une unité de commutation (30, 75) configurée pour commuter entre un état ouvert et un état fermé ;
un circuit de commande comprenant un dispositif de commande (40, 50) ayant un besoin en d'alimentation électrique, le circuit de commande étant connecté à une deuxième sortie de la pluralité de sorties de l'alimentation électrique (10) ;
un convertisseur (60) pour convertir l'alimentation électrique de la deuxième sortie de la pluralité de sorties de l'unité d'alimentation électrique (10) de manière qu'elle satisfasse au besoin en alimentation électrique du circuit de commande ; et
un isolateur (73) configuré pour isoler le circuit de commande et le circuit d'alimentation électrique,
où, en réponse à une commande visant à commander l'unité de commutation (30, 75), le dispositif de commande (40, 50) commande l'unité de commutation (30, 75) amenant l'unité de commutation commandée (30, 75) à commuter entre l'état ouvert et l'état fermé.

9. Système selon la revendication 8, dans lequel l'unité de commutation (30, 75) comprend un premier commutateur (30) et un deuxième commutateur (75), les premier et deuxième commutateurs (30, 75) étant chacun configurés pour commuter entre un état ouvert et un état fermé, et, en réponse à la commande visant à commander l'unité de commutation (30, 75), le dispositif de commande (40, 50) commande les premier et deuxième commutateurs (30, 75) de l'unité de commutation afin d'amener les premier et deuxième commutateurs commandés (30, 75) de l'unité de commutation à commuter entre l'état ouvert et l'état fermé.

10. Système selon la revendication 8 ou la revendication 9, dans lequel :
l'équipement de réseau (20) est l'un d'une pluralité d'équipements de réseau,
le circuit d'alimentation électrique est l'un d'une pluralité de circuits d'alimentation électrique, chaque circuit d'alimentation électrique étant prévu entre une sortie respective de la pluralité de sorties de l'unité d'alimentation électrique (10) et un équipement de réseau respectif (20) de la pluralité d'équipements de réseau, chaque circuit d'alimentation électrique comprenant une unité de commutation respective (30, 75),
l'isolateur (73) est l'un d'une pluralité d'isolateurs, isolant chacun le circuit de commande d'un circuit d'alimentation électrique respectif de la pluralité de circuits d'alimentation électrique,
où, en réponse à la commande visant à commander une ou plusieurs unités de la pluralité d'unités de commutation (30, 75), le dispositif de commande (40, 50) commande de manière sélective lesdites une ou plusieurs unités de la pluralité d'unités de commutation (30, 75) présentes dans la commande afin d'amener lesdites une ou plusieurs unités commandées de la pluralité d'unités de commutation (30, 75) à commuter entre l'état ouvert et l'état fermé.

11. Système selon la revendication 10, dans lequel :
chaque unité de commutation respective (30, 75) comprend un premier commutateur (30) et un deuxième commutateur (75), les premier et deuxième commutateurs (30, 75) de chaque unité de commutation respective étant configurés pour commuter entre un état ouvert et un état fermé, et, en réponse à la commande visant à commander une ou plusieurs unités de la pluralité d'unités de commutation, le dispositif de commande (40, 50) commande de manière sélective les premier et deuxième commutateurs (30, 75) desdites une ou plusieurs unités de la pluralité d'unités de commutation présentes dans la commande afin d'amener les premier et deuxième commutateurs commandés (30, 75) desdites une ou plusieurs unités de la pluralité d'unités de commutation à commuter entre l'état ouvert et l'état fermé.

12. Système selon l'une quelconque des revendications 8 à 11, dans lequel le dispositif de commande (40, 50) est configuré pour recevoir un message incluant une ou plusieurs de :
la commande visant à commander l'unité de commutation (30, 75) ou lesdites une ou plusieurs unités de la pluralité d'unités de commutation (30, 75),
une instruction pour mettre à jour une logique de génération de commande, et
une instruction pour cesser le fonctionnement.

13. Pluralité de systèmes, chaque système de la pluralité de systèmes étant un système selon l'une quelconque des revendications 8 à 11, où, en réponse à la commande visant à commander l'unité de commutation respective (30, 75) ou une ou plusieurs unités de la pluralité d'unités de commutation respectives (30, 75), le dispositif de commande respectif de chaque système :
commande l'unité de commutation respective (30, 75) afin d'amener l'unité de commutation respective commandée (30, 75) à commuter entre l'état ouvert et l'état fermé,
commande les premier et deuxième commutateurs (30, 75) de l'unité de commutation respective amenant les premier et deuxième commutateurs commandés (30, 75) de l'unité de commutation respective à commuter entre l'état ouvert et l'état fermé,
commander de manière sélective lesdites une ou plusieurs unités de la pluralité d'unités de commutation respectives (30, 75) présentes dans la commande amenant lesdites une ou plusieurs unités commandées de la pluralité d'unités de commutation respectives (30, 75) à commuter entre l'état ouvert et l'état fermé, ou
commander de manière sélective les premier et deuxième commutateurs (30, 75) desdites une ou plusieurs unités de la pluralité d'unités de commutation respectives (30, 75) présentes dans la commande de façon à amener les premier et deuxième commutateurs commandés (30, 75) desdites une ou plusieurs unités de la pluralité d'unités de commutation respectives à commuter entre l'état ouvert et l'état fermé.

14. Pluralité de systèmes selon la revendication 13, dans lequel chaque dispositif de commande respectif (40, 50) de la pluralité de systèmes est configuré pour recevoir un message incluant une ou plusieurs de :
la commande visant à commander l'unité de commutation respective (30, 75) ou lesdites une ou plusieurs unités de la pluralité d'unités de commutation respectives (30, 75),
une instruction pour mettre à jour une logique de génération de commande, et
une instruction pour cesser le fonctionnement.

15. Système ou pluralité de systèmes selon la revendication 12 ou la revendication 14, comprenant en outre un dispositif informatique distant (80), le ou chaque dispositif de commande respectif (40, 50) recevant le message en provenance du dispositif informatique distant (80).

16. Système ou pluralité de systèmes selon l'une quelconque des revendications 12, 14 ou 15, dans lequel le ou chaque dispositif de commande (40, 50) comprend un dispositif d'interface homme-machine (83), et le ou chaque dispositif de commande (40, 50) reçoit le message en provenance du dispositif d'interface homme-machine (83).

17. Système selon la revendication 12, ou pluralité de systèmes selon l'une quelconque des revendications 14 à 16, dans lequel le ou chaque dispositif de commande comprend un premier module de dispositif de commande (40) et un deuxième module de dispositif de commande (50), où :
le ou chaque premier module de dispositif de commande respectif (40) est configuré pour recevoir le message, et
le ou chaque deuxième module de dispositif de commande respectif (50) est configuré pour, en réponse à la commande visant à commander l'unité de commutation respective (30, 75) ou une ou plusieurs de la pluralité d'unités de commutation respectives :
commander l'unité de commutation respective (30, 75) amenant l'unité de commutation respective commandée (30, 75) à commuter entre l'état ouvert et l'état fermé,
commander les premier et deuxième commutateurs (30, 75) de l'unité de commutation respective amenant les premier et deuxième commutateurs commandés (30, 75) de l'unité de commutation respective à commuter entre l'état ouvert et l'état fermé,
commander de manière sélective lesdites une ou plusieurs unités de la pluralité d'unités de commutation respectives (30, 75) présentes dans la commande amenant lesdites une ou plusieurs unités commandées de la pluralité d'unités de commutation respectives (30, 75) à commuter entre l'état ouvert et l'état fermé, ou
commander de manière sélective les premier et deuxième commutateurs (30, 75) desdites une ou plusieurs unités de la pluralité d'unités de commutation respectives présentes dans la commande de façon à amener les premier et deuxième commutateurs commandés (30, 75) desdites une ou plusieurs unités de la pluralité d'unités de commutation respectives à commuter entre l'état ouvert et l'état fermé.

18. Système ou pluralité de systèmes selon la revendication 17, lorsqu'elle dépend de la revendication 15, dans lequel le ou chaque premier module de dispositif de commande respectif (40) comprend une interface de communication (45) pour recevoir le message en provenance du dispositif informatique distant (80) et est configuré pour amener le ou chaque deuxième module de dispositif de commande respectif (50) à mettre en œuvre la commande ou l'instruction incluse dans le message.

19. Système ou pluralité de systèmes selon la revendication 17 ou la revendication 18, lorsqu'elles dépendent de la revendication 16, dans lequel le ou chaque premier module de dispositif de commande respectif (40) comprend une interface de dispositif d'interface homme-machine pour recevoir le message en provenance du dispositif d'interface homme-machine, et le ou chaque premier module de dispositif de commande (40) est configuré pour amener le deuxième module de dispositif de commande (50) à mettre en œuvre la commande ou l'instruction incluse dans le message.

20. Système ou pluralité de systèmes selon l'une quelconque des revendications 8 à 19, dans lequel le dispositif de commande (40, 50), chaque dispositif de commande respectif (40, 50), le deuxième module de dispositif de commande (50) ou chaque deuxième module de dispositif de commande respectif (50) comprend un processeur configuré pour mettre en œuvre une logique pour générer la commande.

21. Système ou pluralité de systèmes selon l'une quelconque des revendications 8 à 20, dans lequel l'unité de commutation (30, 75) ou chaque unité de commutation respective (30, 75) est dans un état fermé par défaut.

22. Système ou pluralité de systèmes selon l'une quelconque des revendications 8 à 20, dans lequel l'unité de commutation (30, 75) comprend un ou plusieurs éléments parmi : un contacteur et un relais.

23. Système ou pluralité de systèmes selon l'une quelconque des revendications 8 à 22, dans lequel le ou chaque équipement de réseau (20) est une unité radio distante (RRU) ou une unité en bande de base (BBU).

24. Système ou pluralité de systèmes selon l'une quelconque des revendications 8 à 23, dans lequel le dispositif de commande (40, 50) ou chaque dispositif de commande respectif (40, 50) est un ordinateur monocarte, SBC.

25. Système ou pluralité de systèmes selon l'une quelconque des revendications 17 à 19 ou l'une quelconque des revendications 20 à 24, lorsqu'elles dépendent des revendications 17 à 19, dans lequel le premier module de dispositif de commande (40), chaque premier module de dispositif de commande respectif (40), le deuxième module de dispositif de commande (50) ou chaque deuxième module de dispositif de commande respectif (50) est un ordinateur monocarte, SBC.
